# EUROPÄISCHE PATENTSCHRIFT

(11) **EP 2 728 124 B1**
(45) Veröffentlichungstag und Bekanntmachung des Hinweises auf die Patenterteilung: **12.12.2018**
(21) Anmeldenummer: 12190481.7
(22) Anmeldetag: 30.10.2012
(51) Int. Cl.: F01D 11/08, F01D 11/18

(54) **Turbinenring und Strömungsmaschine**
Turbine ring and turbomachine
Anneau de turbine et turbomachine

(43) Veröffentlichungstag der Anmeldung: 07.05.2014
(73) Patentinhaber: MTU Aero Engines AG, 80995 München (DE)
(72) Erfinder: Feldmann, Manfred, 82223 Eichenau (DE)

(56) Entgegenhaltungen:
- EP-A2- 1 149 985
- DE-A1- 3 018 621
- DE-A1-102004 010 236
- DE-T2- 69 415 765
- US-A- 5 456 576

## Beschreibung

Die Erfindung betrifft eine Strömungsmaschine und einen Turbinenring einer Strömungsmaschine nach dem Oberbegriff des Anspruchs 1, wie in der Druckschrift DE 30 18 621 A1 beschrieben ist.

In der Druckschrift DE 694 15 765 T2 (so auch in der Druckschrift US 5, 456,576) wird ein Turbinenring mit einem Außenring und einem segmentierten Innenring offenbart.

In Strömungsmaschinen wie stationären Gasturbinen oder Flugtriebwerken ergibt sich durch hohe Temperaturdifferenzen zwischen heißgasnahen Bauteilen bzw. Bauteilabschnitten und gehäusenahen Bauteilen bzw. Bauteilabschnitten die Notwendigkeit, einen Ausgleich für das stark unterschiedliche thermische Wachstum der Bauteile zu schaffen.

Beispielhafte Bauteile sind Turbinenringe. Sie sind regelmäßig gehäuseseitig angeordnet und begrenzen einen Spitzenspalt zu gegenüberliegenden Laufschaufelspitzen. Turbinenringe in integraler Bauweise sind gewöhnlich speichenzentriert. Dabei sind sie in gehäuseseitigen radialen Führungen gelagert und können sich so bei Erwärmung frei dehnen. Es hat sich jedoch gezeigt, dass sich die große radiale Dehnung der Turbinenringe wesentlich vom Verhalten der Rotoren bei Erwärmung unterscheidet, so dass der Spitzenspalt vergrößert und somit der Turbinenwirkungsgrad verschlechtert wird. Aus Kostensicht ist die Herstellung der intergalen Turbinenringe aufgrund der reduzierten Teileanzahl allerdings vorteilhaft.

Bei segmentierten Turbinenringen wird der Ausgleich des thermischen Wachstums gewöhnlich durch Umfangsspalte sichergestellt. Die Turbinenringe sind am Gehäuse befestigt, können sich jedoch in Umfangsrichtung frei dehnen. Eine vom Gehäuse den Turbinenringen aufgeprägte radiale Dehnung entspricht eher dem Verhalten der Rotoren, wodurch ein kleinerer Spitzenspalt und folglich ein besserer Wirkungsgrad erreicht wird. Um Leckagespalte zwischen benachbarten Ringsegmenten zu verhindern, müssen deren Stöße abgedichtet werden. Die Vielzahl der Ringsegmente sowie die Abdichtungen erhöhen jedoch den Fertigungsaufwand und damit die Herstellkosten.

Aufgabe der Erfindung ist es, einen Turbinenring einer Strömungsmaschine zu schaffen, der die vorgenannten Nachteile beseitigt und einen präzisen Spitzenspalt ermöglicht. Des Weiteren ist es Aufgabe der Erfindung, eine Strömungsmaschine mit einem verbesserten Wirkungsgrad zu schaffen.

Diese Aufgabe wird gelöst durch einen Turbinenring mit den Merkmalen des Patentanspruchs 1 und durch eine Strömungsmaschine mit den Merkmalen des Patentanspruchs 8.

Ein erfindungsgemäßer Turbinenring einer Strömungsmaschine hat eine einteilige Ringstruktur, die einen in Umfangsrichtung des Turbinenrings durchgehenden Außenring mit einem Befestigungsabschnitt zum Befestigen des Turbinenrings an einem Gehäuseabschnitt der Strömungsmaschine, einen in Umfangsrichtung segmentierten Innenring mit einer Vielzahl von Innenringsegmenten zur Heißgasführung und in Axialrichtung des Turbinenrings betrachtet vordere Dichtsegmente und hintere Dichtsegmente aufweist, die in Axialrichtung voneinander beabstandet sind und sich radial zwischen dem Innenring und dem Außenring erstrecken. Um freie Ausdehnungen der Innenringsegmente in Umfangsrichtung zu ermöglichen und gleichzeitig Leckageströme durch die benachbarten Innenringsegmente hindurch zu verhindern bzw. um deren Bildung zu erschweren, bilden benachbarte Innenringsegmente jeweils einen Überlappstoß. Bevorzugterweise sind die Überlappstöße labyrinthartig ausgebildet, so dass eine Vielzahl von Dichtflächen in Radialrichtung geschaffen werden.

Ein derartiger Turbinenring erlaubt eine Heißgasführung mit radialen thermischen Dehnungen des kühleren Außenrings, was zu einem präzisieren Spitzenverhalten in sämtlichen Betriebszuständen einer Turbine führt. Die heißgasseitigen und somit heißen Innenringsegmente können sich in Umfangsrichtung frei ausdehnen, ohne dass sich deren thermische Ausdehnung auf den heißgasfernen und somit kühlen Außenring überträgt. Bevorzugterweise wird der Turbinenring generativ beispielsweise mittel Lasersintern oder selektiven Laserschmelzen wie SLM (Selective Laser Melting) hergestellt. Die generative Herstellung ermöglicht eine flexible Turbinenringgeometrie und ist zudem technisch zuverlässig. Ferner ist ein derartig hergestellter Turbinenring durch den einteiligen Aufbau kostengünstig.

Bevorzugterweise sind die Innenringsegmente jeweils zumindest mittels eines radialen Verbindungselements mit dem Außenring verbunden. Durch die einzelne Befestigung jedes einzelnen Innenringsegmentes an dem Außenring in Radialrichtung ist eine präzise Ausrichtung der Innenringsegmente in Radialrichtung und in Umfangsrichtung zueinander möglich. Die Innenringe sind hierdurch jeweils einzeln unmittelbar an dem Außenring befestigt und sind nicht mittelbar über benachbarte Innenringsegmente an diesem befestigt.

Bevorzugterweise ist das zumindest eine Verbindungselement in Umfangsrichtung jeweils mittig an den Innenringsegmenten positioniert. Hierdurch erfolgt eine symmetrische Anbindung der Innenringsegmente, was eine gleichmäßige thermische Dehnung von sich seitlich der Verbindungselemente erstreckenden Innenringsegmenthälften ermöglicht. Alternativ sind die Innenringsegmente und die Verbindungselemente asymmetrisch zueinander positioniert. Die Verbindungselemente an sich sind zur Minimierung eines Temperaturübergangs vom Innenring in den Außenring insbesondere dünnwandig. Bei einem Ausführungsbeispiel sind die Verbindungselemente plattenartige Wandelemente mit einer konstanten Wandstärke, die sich in Axialrichtung erstrecken.

Um ein Kippen bzw. Verschwenken der Innenringsegmente um die Verbindungselemente und somit um ihre Längsachse bei einer thermischen Längung der Verbindungselemente zu verhindern, ist im Stoßbereich der Innenringsegmente erfindungsgemäss jeweils ein Gegenhalter positioniert, der sich vom Außenring in Richtung der Innenringsegmente erstreckt. Die Gegenhalter haben eine derartige bevorzugte Erstreckung in Radialrichtung, dass die Innenringsegmente im nicht gelängten Zustand der Verbindungselemente an diesen anliegen bzw. nur über einen minimalen Abstand von diesen beabstandet sind. Alternativ erstrecken sich die Gegenhalter von den Innenringsegmenten in Richtung des Außenrings und liegen im nicht gelängten Zustand der Verbindungselemente an diesem an bzw. sind nur über einen minimalen Abstand von diesem beabstandet.

Bevorzugterweise sind in den Stoßbereichen jeweils zwei in Axialrichtung voneinander beabstandete Gegenhalter vorgesehen. Hierdurch wird eine Verwindung der Innenringsegmente bei einer Ausdehnung um ihre sich in Umfangsrichtung erstreckende Querachse verhindert.

Bevorzugterweise erstrecken sich die Dichtsegmente von den Gegenhaltern und zwischen den Dichtsegmenten und dem Außenring sowie dem Innenring ist jeweils ein Radialspalt gebildet. Durch die radiale Beabstandung können sich die Dichtsegmente in Umfangsrichtung frei ausdehnen. Gleichzeitig sind sie jedoch durch die Erstreckung von den Gegenhaltern sicher an dem Turbinenring angeordnet.

Um Leckagespalte aufgrund der radialen Beabstandung der Dichtsegmente von dem Außenring und dem Innenring zu verhindern, ist es vorteilhaft, wenn die Dichtsegmente randseitig in Umfangsnuten des Außenrings und des Innenrings geführt sind. Durch die randseitige Aufnahme der Dichtsegmente in den Umfangsnuten werden Überlappungen und Umlenkungen ausgebildet, mittels denen wirkungsvoll die Bildung von Leckageströmen zwischen den Dichtsegmenten und dem Außenring sowie dem Innenring unterbunden werden.

Zur Ermöglichung einer freien Ausdehnung der Dichtsegmente in Umfangsrichtung ist es vorteilhaft, wenn zwischen jeweils benachbarten Dichtsegmenten ein Umfangsspalt gebildet ist. Um Leckageströme durch die Umfangsspalte zu verhindern ist es vorteilhaft, wenn diese im Bereich der Verbindungselemente positioniert sind und sich die Dichtungssegmente in Anlage mit den Verbindungselementen befinden. Durch die Überlappungen der Dichtsegmente mit den Verbindungselementen wird eine Abdichtung, die den jeweiligen Umfangsspalt dichtend verschließt.

Eine erfindungsgemäße Strömungsmaschine weist zumindest einen erfindungsgemäßen Turbinenring auf. Aufgrund der optimierten und insbesondere minimalen Spitzenspalten in sämtlichen Betriebsbereichen zwischen dem Turbinenring und Laufschaufelspitzen ergibt sich eine verbesserte Aerodynamik der Strömungsmaschine und insbesondere der Turbine und somit einer höherer Turbinenwirkungsgrad im Vergleich zu einer Strömungsmaschine mit einem herkömmlichen Turbinenring.

Sonstige vorteilhafte Ausführungsbeispiele der Erfindung sind Gegenstand weiterer Unteransprüche.

Im Folgenden wird ein bevorzugtes Ausführungsbeispiel der Erfindung anhand schematischer Darstellungen näher erläutert. Es zeigen:
- Figur 1: einen Teilquerschnitt durch einen erfindungsgemäßen Turbinenring bzw. einen Schnitt entlang der Linie C-C in Figur 2,
- Figur 2: einen Schnitt entlang der Linie A-A in Figur 1,
- Figur 3: einen Schnitt entlang der Linie E-E in Figur 1,
- Figur 4: einen Schnitt entlang der Linie B-B in Figur 1, und
- Figur 5: einen Teilquerschnitt durch den erfindungsgemäßen Turbinenring stromab des Teilschnittes in Figur 1 bzw. einen Schnitt entlang der Linie D-D in Figur 4.

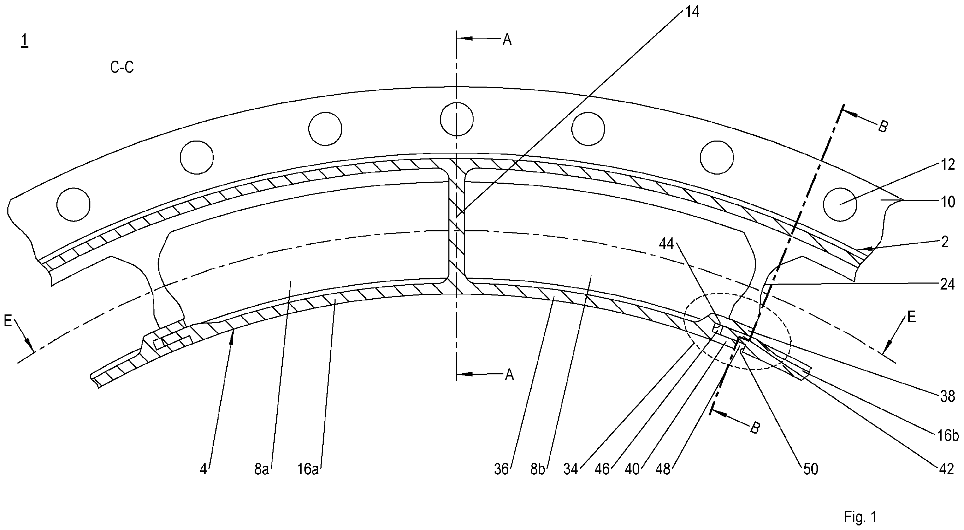

In den Figuren 1 bis 5 sind Teilschnitte durch ein Ausführungsbeispiel eines erfindungsgemäßen Turbinenrings 1 einer Strömungsmaschine wie eine stationäre Gasturbine oder ein Flugtriebwerk gezeigt. Der Turbinenring 1 ist gehäuseseitig befestigt und bildet mit gegenüberliegenden nichtgezeigten Laufschaufelspitzen einen minimalen Spitzenspalt. Er hat eine einteilige Ringstruktur, die durch ein generatives Herstellungsverfahren, beispielweise Lasersintern oder Laserschmelzen, in einem Schritt hergestellt ist.

Wie in Figur 1, 2 und 3 zu erkennen, hat der Turbinenring 1 bzw. seine Ringstruktur einen in Umfangsrichtung des Turbinenrings 1 durchgehenden Außenring 2, einen in Umfangsrichtung segmentierten Innenring 4 und eine Vielzahl von in Axialrichtung des Turbinenrings 1 betrachtet vordere Dichtsegmente 6a, 6b und hintere Dichtsegmente 8a, 8b.

Der Außenring 2 ist in Umfangsrichtung und somit über einen Winkel von 360° geschlossen. Er hat einen Befestigungsabschnitt 10 zur Anbindung an einem Gehäuseabschnitt, der in dem gezeigten Ausführungsbeispiel als ein radial nach außen weisender Ringflansch mit einer Vielzahl von Aufnahmen 12 zum Durchführen von Befestigungsmitteln wie Schrauben ausgebildet ist. Der Außenring 2 hat eine Vielzahl von Verbindungselementen 14, mittels denen jeweils ein Innenringsegment 16a, 16b des Innenrings 4 am Außenring 2 angebunden ist.

Die Verbindungselemente 14 erstrecken sich von dem Außenring 2 radial nach innen in Richtung des Innenrings 4 und sind in dem gezeigten Ausführungsbeispiel wandartig bzw. plattenartig mit einer konstanten Wandstärke ausgebildet. Vorzugsweise, aber nicht notwendigerweise, erstrecken sie sich nahezu über die gesamte Axiallänge des Turbinenrings 1. Der Turbinenring 1 wird somit in eine Vielzahl von fluidtechnisch in Umfangsrichtung voneinander getrennten Kammern unterteilt. Zum fluidtechnischen Verbinden der Kammern, beispielsweise zum Durchführen eines Kühlluftstroms in Umfangsrichtung durch die Kammern hindurch, können die Verbindungselemente 14 jedoch auch mit Kühlluftöffnungen versehen oder rippenartig bzw. stegartig ausgebildet sein. Zur Ermöglichung eines Kühlluftstromes in die Kammern in Radialrichtung, kann der Außenring 2 mit entsprechenden Kühlluftöffnungen versehen oder skelettartig sein.

Zudem hat der Außenring 2 eine umlaufende vordere Umfangsnut 18 und eine umlaufende hintere Umfangsnut 20. Die Umfangsnuten 18, 20 sind jeweils radial nach innen geöffnet und über die Verbindungselemente 14 in Axialrichtung voneinander beabstandet. Sie dienen insbesondere zur Abdichtung eines Leckagespaltes zwischen dem Außenring 2 und den Dichtsegmenten 6a, 6b bzw. 8a, 8b.

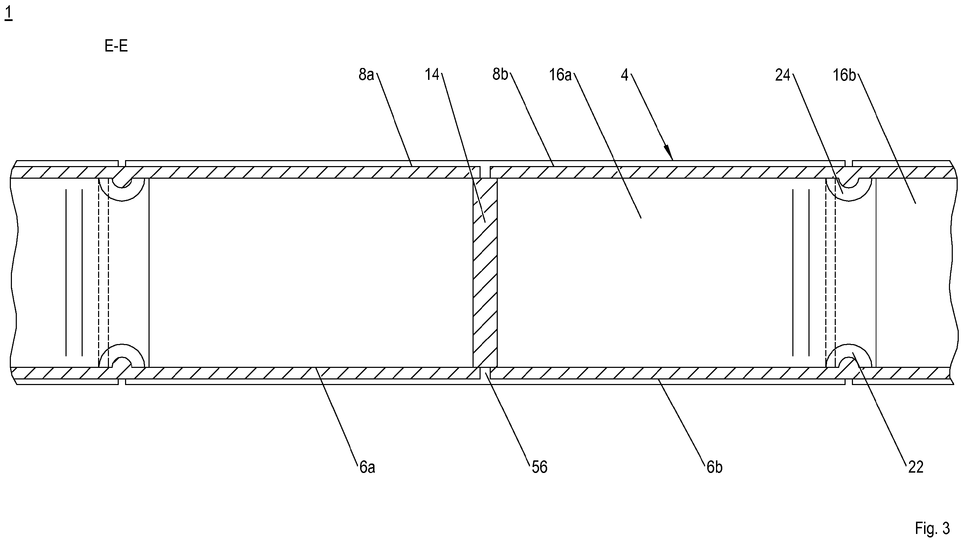

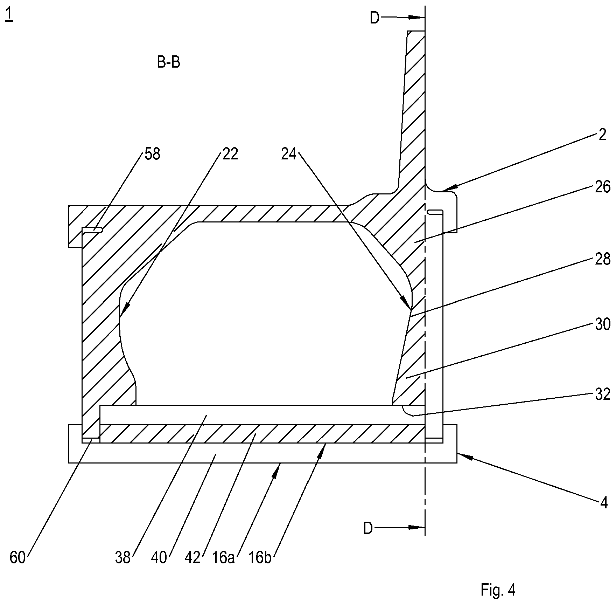

Gemäß Figur 1 hat der Außenring 2 des Weiteren eine Vielzahl von Gegenhaltern 22, 24. Die Gegenhalter 22, 24 dienen zur Stützung der Innenringsegmente 16a, 16b bei einer thermischen Ausdehnung und insbesondere zur Stabilisierung der Innenringsegmente 16a, 16b um ihre sich in Axialrichtung erstreckenden Längsachse bei einer thermischen Ausdehnung der Verbindungselemente 14. Wie in den Figuren 3 und 4 zu erkennen, sind die Gegenhalter 22, 24 in Axialrichtung des Turbinenrings 1 voneinander beabstandet und bevorzugterweise im Bereich der Umfangsnuten 18, 20 angeordnet, wodurch diese quasi segmentiert sind. Insbesondere sind die Gegenhalter 22, 24 im Stoßbereich der jeweils benachbarten Innenringsegmente 16a, 16b positioniert. Sie haben einen verbreiterten Fußabschnitt 26, mittels dem sie an dem Außenring 2 angebunden sind, einen verjüngten Mittelabschnitt 28 und einen verbreiterten Kopfabschnitt 30 mit einer in Richtung der Innenringsegmente 16a, 16b weisenden Anlagefläche 32. Vorzugsweise sind die Gegenhalter 22, 24 und die Verbindungselemente 14 gleichmäßig alternierend in Umfangsrichtung des Turbinenrings 1 verteilt.

Der Innenring 4 dient zur Heißgasführung. Er ist radial innen zum Außenring 2 angeordnet und besteht, wie in Figur 1 zu erkennen, aus einer Vielzahl von den Innenringsegmenten 16a, 16b, die jeweils über einen Überlappstoß 34 fluiddichtend miteinander verbunden sind. Die Innenringsegmente 16a, 16b sind jeweils bogenförmige Plattenelemente, die sich beidseitig, bevorzugterweise beidseitig zu gleichen Anteilen, von den Verbindungselementen 14 in Umfangsrichtung erstrecken. Somit sind die Innenringsegmente 16a, 16b bevorzugterweise mittig an den Verbindungselementen 14 angebunden. Die Anzahl der Innenringsegmente 16a, 16b beträgt ≥ 2. Bevorzugterweise weist der Innenring 4 mindesten 5 Innenringsegmente 16a, 16b auf. Bevorzugterweise ist jeweils ein Innenringsegment 16a, 16b an einem Verbindungselement 14 angebunden.

Die Überlappstöße 34 sind zur Spitzenspaltbildung derart ausgebildet, dass die Innenringsegmente 16a, 16b eine quasi durchgehende, den Laufschaufelspitzen zugewandte Heißgasringfläche 36 mit einem konstanten Innenradius bilden. Die Heißgasringfläche 36 kann mit einer Einlaufbeschichtung oder mit Einlaufbelegen versehen sein, in die die Laufschaufelspitzen einlaufen können. Die Überlappstöße 34 werden jeweils von einem gabelartigen Endbereich mit zwei über eine nicht bezifferte Längsnut voneinander beabstandete Gabelabschnitte 38, 40 des einen Innenringsegments 16a und einem gegenüberliegenden radial nach innen zurückgestuften Endabschnitt 42 eines benachbarten Innenringsegments 16b gebildet. Der Endabschnitt 42 taucht in die Längsnut ein und befindet sich hierbei in Radialrichtung des Turbinenrings 1 fluiddichtend in Anlage mit den Gabelabschnitten 38, 40. Um eine freie thermische Ausdehnung der Innenringsegmente 16a, 16b in Umfangsrichtung zu ermöglichen, ist zum Einen der Endabschnitt 42 vom Nutgrund 44 der Längsnut über einen Umfangsspalt 46 beabstandet. Zum Anderen ist hierzu der radial innere Gabelabschnitt 40 über einen Umfangsspalt 48 von einer gegenüberliegenden Längsseite 50 des benachbarten Innenringsegmentes 16b beabstandet.

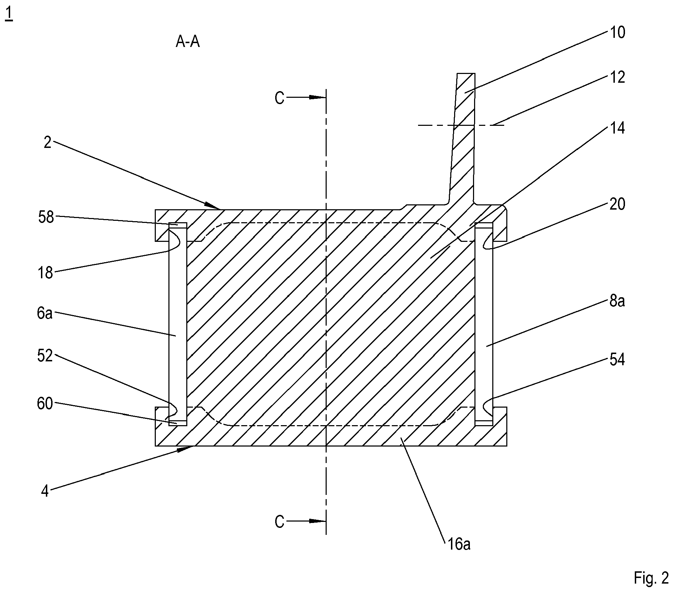

Wie in Figur 2 gezeigt, haben die Innenringsegmente 16a, 16b desweiteren einen vorderen Umfangsnutabschnitt 52 und einen hinteren Umfangsabschnitt 54. Die Umfangsnutabschnitte 52, 54 sind jeweils radial nach außen geöffnet und radial gegenüberliegend zu den Umfangsnuten 18, 20 des Außenrings 2 angeordnet. In Summe ergeben die Umfangsnutabschnitte 52, 54 eine umlaufende vordere Ringnut und eine hintere Ringnut. Die Umfangsnutabschnitte bzw. die Ringnuten 52, 54 dienen insbesondere zur Abdichtung eines Leckagespaltes zwischen dem Innenring 4 und den Dichtsegmenten 6a, 6b bzw. 8a, 8b.

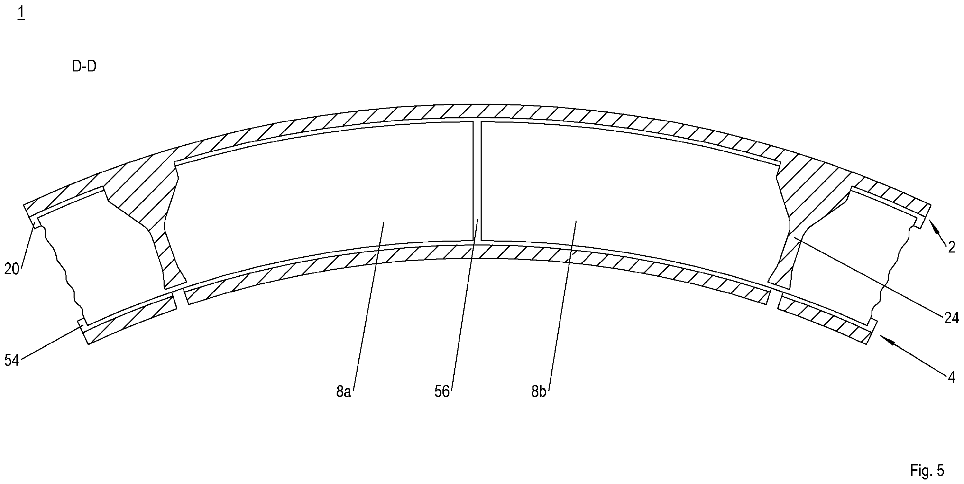

Die Dichtsegmente 6a, 6b, 8a, 8b sind gemäß Figur 5 bogenartige plattenförmige Körper. In Umfangsrichtung erstrecken sich die Dichtsegmente 6a, 6b, 8a, 8b jeweils hälftig von einem Gegenhalter 22, 24 in Richtung der Verbindungselemente 14. Somit sind die Dichtsegmente 6a, 6b, 8a, 8b jeweils mittig an den Gegenhaltern 22, 24 positioniert. Sie sind im Bereich der Verbindungselemente 14 über einen sich in eine Radialrichtung erstreckenden Umfangsspalt 56 voneinander beabstandet. Um einen Leckagestrom durch die Umfangsspalte 56 in die Kammern des Turbinenrings hindurch zu verhindern sind, wie in Figur 2 gezeigt, die Stöße der Dichtsegmente 6a, 6b bzw. 8a, 8b derart in die Bereiche der Verbindungselemente 14 gelegt, dass sich die Dichtsegmente 6a, 6b bzw. 8a, 8b jeweils endseitig in Überlappung mit den Verbindungselementen 14 befinden.

In Radialrichtung sind die Dichtsegmente 6a, 6b, 8a, 8b gemäß Figur 2 in den gegenüberliegenden Umfangsnuten 18, 52 bzw. 20, 54 des Außenrings 2 und des Innenrings 4 geführt und dabei in Radialrichtung jeweils vom nicht bezifferten Nutgrund beabstandet. Hierdurch wird jeweils ein radial äußerer Radialspalt 58 und ein radial innerer Radialspalt 60 gebildet, die eine freie Ausdehnung der Dichtsegmente 6a, 6b, 8a, 8b in Radialrichtung ermöglichen. In Axialrichtung liegen die Dichtsegmente 6a, 6b, 8a, 8b vorzugsweise fluiddichtend an nicht bezifferten Nutwandungen an.

Zur Ermöglichung eines Kühlluftstromes durch den Turbinenring 1 in Axialrichtung hindurch oder in die Kammern hinein, können die Dichtsegmente 6a, 6b, 8a, 8b mit entsprechenden Kühlluftöffnungen versehen oder rippenartig bzw. stegartig sein.

Im in einer Strömungsmaschine montierten Zustand ist der Turbinenring 1 über seinen Befestigungsabschnitt 10 an einem Gehäuseabschnitt der Strömungsmaschine statisch befestigt. Bei Betrieb der Strömungsmaschine erwärmt sich der Innenring 4 bzw. erwärmen sich dessen Innenringsegmente 16a, 16b stärker als der Außenring 2. Die heißen Innenringsegmente 16a, 16b dehnen sich in Umfangsrichtung aus, wobei durch die Umfangsspalte 46, 48 ein Auflaufen auf das jeweils benachbarte Innenringsegment 16a, 16b verhindert wird. Gleichzeitig sind die benachbarten Innenringsegmente 16a, 16b über die labyrinthartigen Überlappstöße 34 in Radialrichtung fluidtechnisch geschlossen.

Dabei werden die Innenringsegmente 16a, 16b durch die Gegenhalter 22, 24 um Ihre Längsachse gestützt. Insbesondere stützen sich die inneren Gabelabschnitte 38 an deren Anlageflächen 32 ab, wodurch die Innenringsegmente 16a, 16b bei einer Ausdehnung in Umfangsrichtung um ihre Längsachse stabilisiert werden.

Durch die Anbindung der Innenringsegmente 16a, 16b an dem Außenring 2 mittels der Verbindungselementen 14 wird eine Übertragung der umfangsseitigen Dehnung der Innenringsegmente 16a, 16b auf den Außenring 2 verhindert. Zudem erfolgt durch die radiale Beabstandung der Innenringsegmente 16a, 16b von dem Außenring 1 in Kombination mit den im Vergleich zu den Innenringsegmenten 16a, 16b schmalen Verbindungselementen 14 kein bzw. nahezu kein Wärmeeintrag von den Innenringsegmenten 16a, 16b in den Außenring 2. Somit besteht ein hoher Temperaturgradient zwischen dem Innenring und dem Außenring 2.

Der Außenring 2 bleibt somit wesentlicher kühler als der Innenring 4 und weist somit ein wesentlich geringeres thermisches Dehnungsverhalten auf. Eine Ausdehnung des Außenrings 2 in Umfangsrichtung ist nahezu vernachlässigbar, wobei durch die radiale Längung der Verbindungselemente 14 der Innenring 4 derart in Radialrichtung verschoben wird, dass in sämtlichen Betriebszuständen ein minimaler Spitzenspalt zu den Laufschaufelspitzen eingestellt wird. Dabei gleichen die Überlappstöße 34 die veränderte radiale Lage der Innenringsegmente 16a, 116b aus, so dass durch die thermische Ausdehnung der Verbindungselemente 14 die Innenringsegmente 16a, 16b nicht gegeneinander verspannt werden.

Die Dichtsegmente 6a, 6b, 8a, 8b dichten durch ihre Aufnahme in den Umfangsnuten 18, 20, 52, 54 die Kammern des Turbinenrings 1 in Axialrichtung und somit in Strömungsrichtung eines Heißgasstroms ab. Aufgrund der gegenseitigen Beabstandung in Umfangsrichtung und der jeweiligen radialen Beabstandung vom Außenring 2 und vom Innenring 4 können sich zum Einen die Dichtsegmente 6a, 6b, 8a, 8b thermisch frei ausdehnen. Zum Anderen wird durch die radiale Beabstandung eine freie Ausdehnung der des Außenrings 2 und des Innenrings 4 erreicht.

Offenbart ist ein Turbinenring einer Strömungsmaschine mit einer einteiligen Ringstruktur, die einen in Umfangsrichtung des Turbinenrings durchgehenden Außenring mit einem Befestigungsabschnitt zum Befestigen des Turbinenrings an einem Gehäuseabschnitt der Strömungsmaschine, einen in Umfangsrichtung segmentierten Innenring mit einer Vielzahl von gegeneinander in Umfangsrichtung verschiebbaren Innenringsegmenten zur Heißgasführung und in Axialrichtung des Turbinenrings betrachtet vordere Dichtsegmente und hintere Dichtsegmente aufweist, die in Axialrichtung voneinander beabstandet sind und sich zwischen dem Innenring und dem Außenring erstrecken, sowie eine Strömungsmaschine mit einem derartigen Turbinenring.

### Bezugszeichenliste

- 1: Turbinenring
- 2: Außenring
- 4: Innenring
- 6a, 6b: vordere Dichtsegment
- 8a, 8b: hintere Dichtsegment
- 10: Befestigungsabschnitt
- 12: Aufnahme
- 14: Verbindungselement
- 16a, 16b: Innenringsegmente
- 18: vordere Umfangsnut
- 20: hintere Umfangsnut
- 22: Gegenhalter
- 24: Gegenhalter
- 26: Fußabschnitt
- 28: Mittelabschnitt
- 30: Kopfabschnitt
- 32: Anlagefläche
- 34: Überlappstoß
- 36: Heißgasringfläche
- 38: Gabelabschnitt
- 40: Gabelabschnitt
- 42: Endabschnitt
- 44: Nutgrund
- 46: Umfangsspalt
- 48: Umfangsspalt
- 50: Längsseite
- 52: vorderer Umfangsnutabschnitt
- 54: hinterer Umfangsnutabschnitt
- 56: Umfangsspalt
- 58: äußerer Radialspalt
- 60: innerer Radialspalt

## Patentansprüche

1. Turbinenring (1) einer Strömungsmaschine, mit einer einteiligen Ringstruktur, die einen in Umfangsrichtung des Turbinenrings(1) durchgehenden Außenring (2) mit einem Befestigungsabschnitt (10) zum Befestigen des Turbinenrings (1) an einem Gehäuseabschnitt der Strömungsmaschine, einen in Umfangsrichtung segmentierten Innenring (4) mit einer Vielzahl von gegeneinander in Umfangsrichtung verschiebbaren Innenringsegmenten (16a, 16b) zur Heißgasführung und in Axialrichtung des Turbinenrings (1) betrachtet vordere Dichtsegmente (6a, 6b) und hintere Dichtsegmente (8a, 8b) aufweist, die in Axialrichtung voneinander beabstandet sind und sich radial zwischen dem Innenring (4) und dem Außenring (2) erstrecken, **dadurch gekennzeichnet, dass**
benachbarte Innenringsegmente (16a, 16b) jeweils einen Überlappungsstoß (34) bilden, und dass im Stoßbereich der Innenringsegmente (16a, 16b) jeweils zumindest ein Gegenhalter (22, 24) positioniert ist, wobei der zumindest eine Gegenhalter (22, 24) einteilig mit dem Außenring (2) ausgebildet ist, und wobei sich der zumindest eine Gegenhalter (22, 24) vom Außenring (2) in Richtung der Innenringsegmente (16a, 16b) erstreckt oder sich von den Innenringsegmenten (16a, 16b) in Richtung des Außenrings (2) erstreckt.

2. Turbinenring nach Anspruch 1, wobei die Innenringsegmente (16a, 16b) jeweils zumindest mittels eines radialen Verbindungselements (14) mit dem Außenring (2) verbunden sind.

3. Turbinenring nach Anspruch 2, wobei das zumindest eine Verbindungselement (14) in Umfangsrichtung jeweils mittig an den Innenringsegmenten (16a, 16b) positioniert ist.

4. Turbinenring nach einem der vorhergehenden Ansprüche, wobei in den Stoßbereichen (34) jeweils zwei in Axialrichtung voneinander beabstandete Gegenhalter (22, 24) vorgesehen sind.

5. Turbinenring nach einem der vorhergehenden Ansprüche, wobei sich die Dichtsegmente (6a, 6b, 8a, 8b) von den Gegenhaltern (22, 24) erstrecken und zwischen den Dichtsegmenten (6a, 6b, 8a, 8b) und dem Außenring (2) und dem Innenring (4) jeweils ein Radialspalt (58, 60) gebildet ist.

6. Turbinenring nach Anspruch 5, wobei die Dichtsegmente (6a, 6b, 8a, 8b) in Umfangsnuten (18, 20, 52, 54) des Außenrings (2) und des Innenrings (4) geführt sind.

7. Turbinenring nach Anspruch 6, wobei zwischen jeweils benachbarten Dichtsegmenten (6a, 6b, 8a, 8b) im Bereich der Verbindungselemente (14) ein Umfangsspalt gebildet ist.

8. Strömungsmaschine mit einem Turbinenring (1) nach einem der vorhergehenden Ansprüche.

## Claims

1. Turbine ring (1) of a continuous flow machine, with a one-piece ring structure comprising anouter ring (2) passing through in the peripheral direction of the turbine ring (1), with a fastening section (10) for securing the turbine ring (1) to a housing section of the continuous flow machine,a segmented inner ring (4) with numerous inner ring segments (16a, 16b) for supplying gas that are movable with respect to each other in the peripheral direction, and as viewed in the direction of the turbine ring (1), front sealing segments (6a, 6b) and back sealing segments (8a, 8b), which are spaced from each other in the axial direction and extend radially between the inner ring (4) and the outer ring (2), **characterized in that**
neighboringinner ring segments (16a, 16b) respectively formanoverlapping joint (34), and that at least one arrestor (22, 24) is respectively positioned in the joint area of the inner ring segments (16a, 16b), with the at least single arrestor (22, 24) being of one piece with the outer ring a (2), and with the at least single arrestor (22, 24) extending from of the outer ring (2) toward the inner ring segments (16a, 16b) or extending from the inner ring segments (16a, 16b) toward the outer ring (2).

2. Turbine ring according to claim 1, wherein the inner ring segments (16a, 16b) are respectively connected with the outer ring (2) by means of at least a radial connecting element (14).

3. Turbine ring according to claim 2, wherein at least one connecting element (14) respectively in the circumferential direction toward the center of the inner ring elements(16a, 16b) is positioned.

4. Turbine ring according to one of the preceding claims, wherein two arrestors (22, 24) respectively spaced from each other being provided in the overlapping joint areas (34).

5. Turbine ring according to one of the preceding claims, with the sealing segments (6a, 6b, 8a, 8b) extendingfrom the arrestors (22, 24) and witha radial clearance (58, 60) is formed between the sealing segments (6a, 6b, 8a, 8b) and the outer ring (2) and the inner ring (4).

6. Turbine ring according to claim 5, wherein the sealing segments (6a, 6b, 8a, 8b) is guided through in circumferential grooves (18, 20, 52, 54) of the outer ring (2) and the inner ring (4).

7. Turbine ring according to claim 6, wherein a peripheral gap is formed in the area of the connecting elements (14) between neighboring sealing segments (6a, 6b, 8a, 8b).

8. Continuous flow machine with a turbine ring (1) according to one of the preceding claims.

## Revendications

1. Anneau de turbine (1) pour une turbomachine, ayant une structure annulaire monobloc, qui présente un anneau externe (2) s'étendant sur la circonférence de l'anneau de turbine (1) avec une section de fixation (10) pour fixer l'anneau de turbine (1) à une section de carter de la turbomachine, un anneau interne (4) segmenté sur la circonférence avec plusieurs segments d'anneau interne (16a, 16b) coulissant les uns par rapport aux autres sur la circonférence pour acheminer des gaz chauds, et des segments de joint (6a, 6b) à l'avant et des segments de joint (8a, 8b) à l'arrière selon la direction axiale de l'anneau de turbine (1), espacés les uns des autres selon la direction axiale et s'étendant radialement entre l'anneau interne (4) et l'anneau externe (2), **caractérisé en ce que**
les segments d'anneau interne (16a, 16b) adjacents forment respectivement un recouvrement (34), et **en ce que**
au moins un contre-support (22, 24) est positionné dans la zone de recouvrement des segments d'anneau interne (16a, 16b), l'au moins un contre-support (22, 24) étant conçu monobloc avec l'anneau externe (2), et l'au moins un contre-support s'étendant depuis l'anneau externe (2) en direction des segments d'anneau interne (16a, 16b) ou s'étendant depuis les segments d'anneau interne (16a, 16b) en direction de l'anneau externe (2).

2. Anneau de turbine selon la revendication 1, dans lequel les segments d'anneau interne (16a, 16b) sont respectivement liés à l'anneau externe (2) par au moins un élément de liaison radial (14).

3. Anneau de turbine selon la revendication 2, dans lequel l'au moins un élément de liaison radial (14) est positionné au milieu des segments d'anneau interne (16a, 16b) sur la circonférence.

4. Anneau de turbine selon l'une des revendications précédentes, dans lequel sont prévus respectivement deux contre-supports (22, 24) espacés l'un de l'autre selon la direction axiale dans la zone de recouvrement (34).

5. Anneau de turbine selon l'une des revendications précédentes, dans lequel les segments de joint (6a, 6b, 8a, 8b) s'étendent depuis les contre-supports (22, 24) et dans lequel un interstice radial (58, 60) est constitué entre les segments de joint (6a, 6b, 8a, 8b), l'anneau externe (2) et l'anneau interne (4).

6. Anneau de turbine selon la revendication 5, dans lequel les segments de joint (6a, 6b, 8a, 8b) sont installés dans des fentes périphériques (18, 20, 52, 56) de l'anneau externe (2) et de l'anneau interne (4).

7. Anneau de turbine selon la revendication 6, dans lequel un interstice périphérique est constitué entre les segments de joint (6a, 6b, 8a, 8b) adjacents dans la zone des éléments de liaison (14).

8. Turbomachine avec un anneau de turbine (1) selon une des revendications précédentes.
